# EUROPÄISCHE PATENTSCHRIFT

(11) **EP 3 894 721 B1**
(45) Veröffentlichungstag und Bekanntmachung des Hinweises auf die Patenterteilung: **16.07.2025**
(21) Anmeldenummer: 20704785.3
(22) Anmeldetag: 24.01.2020
(51) Int. Cl.: F16G 13/16, H02G 11/00

(54) **ENERGIEFÜHRUNGSKETTE MIT SEITENSTABILISIERTEN LASCHEN AUS KUNSTSTOFF**
CABLE CARRIER HAVING LATERALLY STABILIZED TABS MADE OF PLASTIC
CHAÎNE DE TRANSPORT D'ÉNERGIE AVEC DES FLASQUES EN MATIÈRE PLASTIQUE À STABILISATION LATÉRALE

(30) Priorität: 25.01.2019 DE 202019100466 U
(43) Veröffentlichungstag der Anmeldung: 20.10.2021
(73) Patentinhaber: Igus GmbH, 51147 Köln (DE)
(72) Erfinder: HERMEY, Andreas, 53773 Hennef (DE); JAEKER, Thilo-Alexander, 53757 Sankt Augustin (DE); STRACK, Stefan, 53639 Königswinter (DE); THEISS, Georg, 50678 Köln (DE)
(74) Vertreter: Lippert Stachow Patentanwälte Rechtsanwälte
(86) Internationale Anmeldenummer: PCT/EP2020/051806
(87) Internationale Veröffentlichungsnummer: WO 2020/152349

(56) Entgegenhaltungen:
- US-B1- 6 190 277

## Beschreibung

Die vorliegende Erfindung betrifft allgemein das Gebiet der Energieführungsketten zur dynamischen Führung von Leitungen zwischen zwei relativbeweglichen Anschlussstellen. Energieführungsketten haben typisch Kettenglieder mit jeweils zwei gegenüberliegenden Laschen (auch Seitenlaschen oder Seitenteile genannt), welche über mindestens einen, meist zwei Querstege miteinander verbunden sind, entweder fest oder lösbar. Die Kettenglieder definieren einen inneren Aufnahmeraum zum Führen der Leitungen, wie z.B. Kabel zur elektrischen Signal- oder Stromversorgung oder pneumatische bzw. hydraulische Schläuche.

Die vorliegende Erfindung betrifft die Bauweise bzw. Gestaltung der Kettenlaschen für sich genommen, und insbesondere Laschen, die aus Kunststoff hergestellt sind, besonders bevorzugt im Spritzgussverfahren. Speziell bei Energieführungsketten aus Kunststofflaschen haben sich zwei Typen sehr bewährt.

Bei einem ersten Typ hat die Energieführungskette, wie z.B. in WO 95/04231 A1 beschrieben, zwei Laschenstränge, die jeweils aus zwei unterschiedlichen Arten von Laschen aufgebaut sind, nämlich aus alternierend aufeinander folgenden Innenlaschen und Außenlaschen, mit jeweils unterschiedlicher Gestaltung. Dabei haben die Innenlaschen dem Ketteninneren zugewandte innere Überlappungsbereiche und die Außenlaschen äußere Überlappungsbereiche. Benachbarte Laschen überlappen jeweils einseitig mit ihren Überlappungsbereichen und sind mit diesen in geeigneter Weise gelenkig miteinander verbunden, so dass sie relativ zueinander in einer Ebene um eine Schwenkachse zueinander verschwenkbar sind. Die schwenkbare Verbindung erfolgt typisch durch eine Bolzen-/Bohrung- bzw. eine Zapfen-/Aufnahme-Drehgelenkverbindung. Jede Lasche des ersten Typs ist in Draufsicht typisch flach, mit in einer Ebene liegenden endseitigen Überlappungsbereichen.

Beim zweiten Typ hat die Energieführungskette zwei Laschenstränge, die aus jeweils gleichartigen sogenannten gekröpften Laschen, insbesondere aus Kunststoff, aufgebaut sind. Eine solche Lasche, wie z.B. im Patent DE 3 531 066 C2 bzw. US 4,813,224 A gezeigt, hat innenseitig einen ersten Überlappungsbereich und gegenüber diesem nach seitlich außen versetzt bzw. gekröpft einen zweiten Überlappungsbereich. Die gekröpfte Lasche hat in Draufsicht meist eine Kontur ähnlich einer gestreckten Z-Form. Auch gekröpfte Laschen werden mit einseitig überlappenden Überlappungsbereichen in einer Ebene schwenkbar miteinander verbunden, ebenfalls typisch über eine Zapfen-/Aufnahme-Drehgelenkverbindung.

Die Erfindung ist auf die aus Kunststoff gefertigten Laschen beider vorgenannter Typen gleichermaßen anwendbar. Beim zweiten Typ werden jedem Laschenstrang typisch baugleiche gekröpfte Laschen eingesetzt, wobei die gekröpften Laschen des einen Strangs zu denen des gegenüberliegenden Strangs spiegelsymmetrisch sind. Bei Energieführungsketten mit Innen-/Außenlaschen bzw. des ersten Typs kann jede Lasche in jedem Laschenstrang verwendbar sein. Ferner ist es beim ersten Typ möglich, wie in WO 98/46906 A1 vorgeschlagen, Laschen des ersten Typs so zu gestalten, dass die Lasche in jedem Strang um 180° gedreht verwendbar ist, um je nach Orientierung andere Anschlagwinkel vorzugeben, z.B. zwecks Vorspannung. Die Erfindung ist besonders vorteilhaft, aber nicht ausschließlich, auf eine Innenlasche dieser Art anwendbar.

Gattungsgemäße Kettenlaschen aus Kunststoff beider Typen, d.h. alternierend verbindbare Innen-/Außenlaschen oder gekröpfte Laschen, sind jeweils für eine nur einseitige Überlappung benachbarter Überlappungsbereiche ausgeführt. Nicht Gegenstand der vorliegenden Erfindung sind daher sogenannte Gabellaschen. Diese grundsätzlich andere Bauart hat ein in Draufsicht etwa U-förmiges gabelförmiges Ende, in welches die benachbarte Lasche eingreift und beidseitig überlappt wird. Diese Bauart hat sich, jedenfalls bei Kunststofflaschen, nicht durchgesetzt u.a. wegen hohem Materialbedarf und resultierendem Gewicht.

Bei Energieführungsketten treten insbesondere bei freitragenden Anwendungen (wenn das Obertrum freitragend über dem Untertrum verläuft), bei langen Verfahrwegen oder auch bei Horizontalanwendungen, hohe Querkräfte bzw. Momente auf, die eine hohe Seitenstabilität der Laschenverbindung erfordert. Dies ist bei nur einseitig überlappenden Laschen besonders wichtig. Es muss z.B. unbedingt vermieden werden, dass sich Gelenkverbindungen durch Querkräfte im laufenden Betrieb auftrennen.

Für den ersten Kettentyp hat z.B. WO 95/04231 A1 vorgeschlagen, dass zumindest an den Außenlaschen die Querstege an ihren Enden so aufweiten, dass diese den Überlappungsbereich der benachbarten Innenlaschen übergreifen und zugleich als Sicherung gegen Trennung der Laschen quer zur Längsrichtung wirken.

Zur Verbesserung der Seitenstabilität beider Laschentypen hat die Anmelderin im Patent EP 0 803 032 B1 bzw. US 5,980,409 A eine weitergehende Lösung vorgeschlagen. Hier wird für beide Typen vorgeschlagen, dass bei jeweils zwei im Laschenstrang aufeinander folgenden Laschen die eine Lasche mit einem sich parallel zur Verschwenkebene erstreckenden, kreisbogenförmigen Führungsbereich in einen Freiraum hinter einen vorstehenden Haltevorsprung der anderen Lasche eingreift. Der Eingriff des Führungsbereichs der einen Lasche hinter den Haltevorsprung an der anderen Lasche führt zu höherer Seitenstabilität.

Dieser (als nächstliegend betrachtete) Stand der Technik zur Steigerung der Seitenstabilität gattungsgemäßer Energieführungsketten gemäß EP 0 803 032 B1 hat sich bewährt. Er bringt jedoch einige Einschränkungen der Laschengestaltung mit sich, insbesondere hinsichtlich der konstruktiven Gestaltungsfreiheit der zur Begrenzung des Schwenkwinkels notwendigen Anschläge und/oder der Dimensionierung des Zapfens bzw. der Aufnahme für das Schwenkgelenk. Für den Zusammenbau eines Laschenstrangs müssen nämlich - zwecks Einführen des Führungsbereichs in die fast über 180° laufende Führungsnut - die Laschen mit einer schrägen Steckrichtung zusammengefügt werden. Ein spielfreies Eingreifen hinter dem Haltevorsprung bedingt jedoch einen relativ spitzen bzw. sehr kleinen Einführwinkel der Lasche mit Führungsbereich in die Lasche mit Haltevorsprung.

Dieser spitze Steck- bzw. Einführwinkel erlaubt wiederum keine beliebige Position der Anschläge zur Schwenkwinkelbegrenzung am Überlappungsbereich und schränkt die Dimensionierung des ebenfalls seitlich vorstehenden Schwenkzapfens ein.

Zur Kompensation schlägt EP 0 803 032 B1 bereits vor, abgeschrägte Kanten bzw. Einführschrägen vorzusehen, u.a. am Gelenkbolzen, am Haltevorsprung und an Teilabschnitten des Führungsbereichs, durch welche der Einführwinkel geringfügig vergrößert werden kann. Dies ist nur bedingt zufriedenstellend. Es erlaubt weiterhin keine weitgehend freie Anordnung und Anzahl der Anschlagvorsprünge bzw. entsprechender Ausnehmungen an den Überlappungsbereichen. Zudem wird die Komplexität der Laschengeometrie erhöht.

Andererseits erfordert die geometrische Komplexität der Seitenlaschen nach EP 0 803 032 B1, insbesondere das Herstellen einer Führungsnut mit ausreichend geringen Toleranzen, aufwändige Spritzguss-Formwerkzeuge mit beweglichen Teilen, wie Schiebern für die Hinterschnitte usw.. Dies wiederum verteuert die Werkzeuge, macht diese im Betrieb störanfälliger und erfordert außerdem verhältnismäßig lange Taktzeiten in der Spritzgussmaschine.

DE 11 2016 001 315 T5 beschreibt Kunststofflaschen, die sich nur in den beiden Endstellungen der zueinander verschwenkbaren Laschen teilweise hintergreifen können. Damit kann eine zuverlässige Seitenstabilisierung über die gesamte Länge bzw. alle Betriebszustände nicht erzielt werden.

Die Patente EP 2 005 025 B1 bzw. US 7,877,978 B2 beschreiben Laschen aus Metall, insbesondere flächige Blechlaschen, mit einem durch Verformen z.B. durch Tiefziehen hergestellten Vorsprung, hinter welchen die nächste Lasche eingreift. Die Gestaltung und Herstellung von Blechlaschen lässt sich jedoch nicht ohne Weiteres auf Kunststofflaschen anwenden.

Eine ähnliche Energieführungskette wird in der US 6 190 277 B1 offenbart.

Eine erste Aufgabe der vorliegenden Erfindung liegt mithin darin, gattungsgemäße Energieführungsketten bzw. Kettenlaschen, insbesondere aus Kunststoff, mit Seitenstabilisierungsfunktion dahingehend weiterzubilden, dass die Gestaltungsfreiheit, insbesondere hinsichtlich der Schwenkwinkelanschläge und/oder Schwenkgelenkverbindungen, verbessert wird. Vorzugsweise soll zugleich eine Bauweise der Kettenlasche vorgeschlagen werden, welche die Herstellung in einem gegenüber dem Stand der Technik vereinfachten Formwerkzeug ermöglicht, d.h. die Herstellungskosten senkt.

Erfindungsgemäß wird dies bereits dadurch erreicht, dass der Haltevorsprung im Vergleich zum Stand der Technik eine deutlich kürzere Abmessung in Schwenkrichtung hat, insbesondere bezogen auf die Abmessung des kreisbogenförmigen Führungsbereichs in Umfangsrichtung, zumindest bezogen auf dessen über den gesamten Verschwenkwinkel wirksame bzw. in Eingriff gelangende Abmessung. Durch einen in Umfangsrichtung um den Kreisbogen der Schwenkbewegung spürbar kürzer dimensionierten bzw. erstreckten Haltevorsprung wird nämlich erreicht, dass die eingreifende Lasche in einem deutlich größeren Winkel zur Laschenebene der haltenden Lasche hinter deren Haltevorsprung eingefügt werden kann. Dies wiederum erhöht die Gestaltungsfreiheit u.a. hinsichtlich Baugröße und/oder Anordnung von an den Überlappungsbereichen vorstehenden Funktionsbestandteilen, insbesondere hinsichtlich Anzahl und Dimensionierung der Anschlagvorsprünge und/oder Dimensionierung des Schwenkzapfens.

Erfindungsgemäß kann also die erste Aufgabe bereits dadurch gelöst werden, dass jeder Haltevorsprung in Umfangsrichtung um die Schwenkachse begrenzt dimensioniert ist, sodass der kreisbogenförmige Führungsbereich einer eingreifenden Lasche, insbesondere bezogen auf seine wirksame Umfangsabmessung und in jeder Schwenkstellung, überwiegend nicht vom Haltevorsprung übergriffen ist, dies insbesondere ungeachtet der bzw. in jeder Schwenkstellung. Geometrischer definiert kann dies erreicht werden, wenn jeder Haltevorsprung in Umfangsrichtung bezogen auf die relative Schwenkbewegung bzw. um die benachbarte Schwenkachse begrenzt dimensioniert ist, sodass der kreisbogenförmige Führungsbereich der angrenzenden bzw. eingreifenden Lasche über einen überwiegenden Anteil der Bogenlänge bzw. Winkelweite des kreisbogenförmigen Führungsbereichs nicht vom Haltevorsprung übergriffen ist. Dies soll unabhängig von der betrachteten Schwenkstellung bzw. in jeder relativen Schwenkstellung beider Laschen zueinander gelten, um das Zusammenfügen aus unterschiedlichen Richtungen zu erleichtern. Hierbei kann insbesondere vorgesehen sein, dass in Summe aller Anteile betrachtet mindestens zwei Drittel oder mehr des kreisbogenförmigen Führungsbereichs aufgrund der umfangsbegrenzten Dimensionierung des Haltevorsprungs jeweils nicht von diesem übergriffen sind. Als Bogenlänge des in der Schwenkebene im Wesentlichen kreisbogenförmig gestalteten Führungsbereichs wird dabei mindestens die über den gesamten Weg der zulässigen Relativschwenkbewegung wirksame bzw. in Eingriff gelangende Bogenlänge verstanden, welche von der Schwenkwinkelbegrenzung abhängt. Bei einer üblichen darüber hinaus weitergehenden Kreisbogenform des Führungsbereichs wird insbesondere auch deren gesamte Bogenlänge betrachtet (entsprechend dem größten vorgesehenen Schwenkwinkel bzw. kleinsten Umlenkbogen), stets bezogen auf die zugehörige Schwenkachse, d.h. den Mittelpunkt der Kreisbogenform.

Es wird dabei insbesondere die Bogenlänge am Stirnende des Führungsbereichs betrachtet. Bei Winkelbetrachtung ist die Lage des betrachteten Bogens unbeachtlich. Gleichwertig ausgedrückt kann also im Sinne der Erfindung die erste Aufgabe bereits dadurch gelöst werden, dass jeder Haltevorsprung in Umfangsrichtung bezogen auf die relative Schwenkbewegung derart begrenzt ist, dass der kreisbogenförmige Führungsbereich der eingreifenden Lasche stets über einen überwiegenden Anteil der Winkelweite des kreisbogenförmigen Führungsbereichs nicht vom Haltevorsprung übergriffen ist bzw. seitlich nach außen frei liegt.

Im Umkehrschluss kann die Aufgabe also bereits dadurch gelöst werden, dass der Haltevorsprung in Umfangsrichtung bezogen auf die Schwenkachse so begrenzt ist, dass der kreisbogenförmige Führungsbereich in jeder Schwenkstellung lediglich über einen vergleichsweise kleinen Längenanteil seiner Bogenlänge bzw. einen kleinen Winkelanteil seiner Winkelweite, beispielsweise weniger als ein Drittel, vom Haltevorsprung überlagert ist. Kurz gesagt, der Haltevorsprung hat in dieser Umfangsrichtung eine vergleichsweise kurze eingriffswirksame Baulänge. Diese kann dabei auf das zur Seitenstabilität nötige Maß minimiert sein. Die eingriffswirksame Bogenlänge bzw. Winkelweite des Haltevorsprungs kann insbesondere in jeder relativen Schwenkstellung der Laschen einen gleichbleibend geringen Anteil der Bogenlänge bzw.

Winkelweite des Führungsbereichs, vorzugsweise < 1/3 bzw. 33%, darstellen.

Gemäß einem weiteren unabhängigen Lösungsansatz wird die Aufgabe, unabhängig von der Dimensionierung des Führungsbereichs bereits dadurch gelöst, dass alle bzw. jeder zur Seitenstabilisierung dienende Haltevorsprung der Lasche so dimensioniert sind/ist, dass diese ausschließlich innerhalb eines von der Längsmittelebene der Lasche halbierten Winkelbereichs α < 60°, vorzugsweise ≤ 45°, um die benachbarte Schwenkachse (d.h. mit Winkel-Scheitelpunkt auf dieser Schwenkachse) angeordnet sind/ist. Die benachbarte Schwenkachse bezeichnet dabei die Schwenkachse desjenigen Überlappungsbereichs, über bzw. in dem der jeweiligen Haltevorsprung vorsteht. Die Längsmittelebene der Lasche bezeichnet vorliegend, ungeachtet einer mittigen Lage, eine Ebene welche beide Schwenkachsen der betrachteten Lasche enthält bzw. durch diese Schwenkachsen definiert ist und in Längsrichtung verläuft. Die Höhen-Mittelebene bezeichnet nachfolgend die Mittelebene der Lasche senkrecht zur ihrer Längsrichtung.

Die Erleichterung der Montage bzw. freiere Gestaltung vermeidet diese Anordnung indem jegliche Haltevorsprünge oder Teilbereiche solcher außerhalb des vorgenannnten Winkelbereichs, an der Lasche vorgesehen werden. Diese gilt insbesondere für beide Seiten einer gekröpften Lasche bzw. beide Überlappungsbereiche einer Innen-/Außenlasche.

Der Haltevorsprung übergreift also nicht, wie noch mit den bevorzugten Beispielen aus EP 0 803 032 B1 vorgeschlagen, einen überwiegenden Anteil der Bogenlänge des Führungsbereichs, sondern stets lediglich einen vergleichsweise geringfügigen Anteil. Der Haltevorsprung kann dabei insbesondere räumlich beschränkt auf den mittleren Teilbereich bzw. Höhenabschnitt der Laschenhöhe ausgeführt sein.

Bevorzugt wird für jeden seitlich zu haltenden Überlappungsbereich nur genau ein Haltevorsprung vorgesehen, der vorzugsweise mittig zur Laschenhöhe, insbesondere symmetrisch bzgl. der Laschen-Längsmittelebene gestaltet ist. Auch denkbar ist eine Aufteilung mit z.B. zwei kleineren Haltevorsprüngen innerhalb des begrenzten Winkelbereichs α < 60°, vorzugsweise ≤ 45°, um die benachbarte Schwenkachse. Im Übrigen kann der Haltevorsprung unterschiedlichste Formen haben.

Die erfindungsgemäße Gestaltung ist gleichermaßen auf Ketten bzw. Laschen des ersten Typs nach dem Oberbegriff aus Anspruch 1 bzw. 2 oder 3 oder auf Ketten bzw. Laschen des zweiten Typs nach dem Oberbegriff aus Anspruch 4 bzw. 5, insbesondere auf Kunststofflaschen anwendbar. Auf die Seitenstabilisierung bezogene Merkmale wie vorstehend oder indiesen Ansprüchen definiert sind grundsätzlich untereinander austauschbar und einzeln kombinierbar, sowie einzeln als erfindungswesentlich zu sehen.

Ungeachtet des Laschentyps sind z.B. die Überlappungsbereiche typisch über einen mittig angeordneten, etwa auf der halben Teilungslänge des Kettengliedes ausgeprägten Mittelbereich einteilig verbunden. Der Mittelbereich hat typisch gegenüber den Überlappungsbereichen zumindest stellenweise eine größere Wandstärke bzw. Dicke senkrecht zur Schwenkebene. Bevorzugt ist der Haltevorsprung einteilig vom Mittelbereich vorstehend bzw. mit diesem verbunden. Somit kann jeder Haltevorsprung bevorzugt über einen Verbindungsbereich mit einer auch gegenüber dem Haltevorsprung größeren Wandstärke bzw. Dicke mit dem restlichen Körper der Lasche verbunden sein.

Eine erfindungsgemäße Lasche ist entweder eine Innenlasche bzw. Außenlasche (erster Typ) oder aber eine gekröpfte Lasche (zweiter Typ), und wird besonders bevorzugt aus Kunststoff im Spritzguss hergestellt, insbesondere einstückig bzw. aus einem Guss. Der Begriff Kunststofflaschen bezeichnet vorliegend Laschen, die zumindest überwiegend oder vollständig aus Kunststoff hergestellt sind, insbesondere in einem Verfahren zum Urformen aus dem plastischen Zustand (vgl. DIN 8580), vorzugsweise durch Spritzgießen.

Bei Laschen des ersten Typs werden Haltevorsprünge bevorzugt zumindest an der Außenseite der Innenlasche vorgesehen, in welche Führungsbereiche der überlappenden Außenlaschen eingreifen. Eine Seitenstabilisierung der Endbereiche der Innenlaschen hingegen kann bereits durch geeignete Querstege bzw. Öffnungsstege an den Außenlaschen erzielt werden, d.h. weitere Haltevorsprünge an den Außenlaschen sind nur bedingt vorteilhaft. Haltevorsprünge in der hier vorgeschlagenen Anordnung können aber ergänzend oder alternativ auch an der Innenseite der Außenlasche vorgesehen sein.

Ein Schwenkzapfen oder eine passende Schwenkzapfenaufnahme zur Bildung der Dreh- bzw. Schwenkgelenkverbindung können, ungeachtet des Laschentyps, gleichwertig wahlweise am inneren oder äußeren Überlappungsbereich vorgesehen sein.

In einer bevorzugten Ausführungsform ist der Haltevorsprung in Umfangsrichtung um die benachbarte bzw. proximale Schwenkachse des eingreifenden Führungsbereichs so begrenzt, dass der kreisbogenförmige Führungsbereich in jeder Schwenkstellung über einen maximalen Winkel um die Schwenkachse überdeckt ist, der < 60°, vorzugsweise ≤ 45°, beträgt. Eine möglichst kleine Winkelweite des Übergriffs erlaubt einen möglichst großen Einführwinkel beim Zusammenbau der Laschen.

Um bei Betrachtung in der Schwenkebene ein möglichst kleines, materialsparendes Verhältnis der übergriffenen bzw. überdeckten zur freiliegenden Bogenfläche des Führungsbereichs zu erzielen, ist es vorteilhaft, wenn die radiale Eingrifftiefe des kreisbogenförmigen Führungsbereichs in den vom Haltevorsprung überdeckten Freiraum vergleichsweise klein ist. Dies kann insbesondere kleiner als 15%, bevorzugt kleiner oder gleich 12,5% des Kreisbogenradius des Führungsbereichs gemessen vom stirnseitigen Rand des Führungsbereichs zur Schwenkachse des Führungsbereichs betragen.

Zusätzlich zur Reduzierung des Hinterschnitts kann eine besonders vorteilhafte Vereinfachung des Formwerkzeugs erzielt werden, wenn jeder Haltevorsprung zumindest teilweise eine Laschenöffnung überdeckt, der sich von der Innenseite des Haltevorsprungs durch einen bzw. den Mittelbereich der Lasche zur abgewandten Seitenfläche der Lasche erstreckt. Wird der Haltevorsprung über einer Öffnung durch die Lasche gebildet, ist kein Schieber zur Herstellung einer Hinterschneidung erforderlich. Ungeachtet dessen kann eine Öffnung durch die Seitenlasche vorteilhaft so gestaltet sein, dass der Einführwinkel weiter vergrößert werden kann, weil die eingreifende Lasche beim Einstecken in den Freiraum hinter dem Haltevorsprung teilweise in die zum Freiraum offene Öffnung hineinragen kann.

Die Bauweise mit dem Haltevorsprung zugeordneter Laschenöffnungen ist besonders vorteilhaft bei einer relativ flach bauenden Innenlasche bzw. Außenlasche. Hierbei wird vorzugsweise vorgesehen, dass zwei voneinander abgewandte Haltevorsprünge eine gemeinsame Laschenöffnung durch den Mittelbereich überdecken. Zur Stabilität können die gegenüberliegenden Haltevorsprünge einstückig mit einer verstärkten Materialbrücke über die Laschenöffnung geformt sein, welche die Laschenöffnung z.B. in Richtung der Laschenhöhe überbrückt. Diese Geometrie lässt sich durch einen zur Öffnung und ggf. der Brücke passend geformten festen Vorsprung in einer Formwerkzeughälfte leicht herstellen. Denkbar ist weiterhin ergänzend oder alternativ, z.B. zur Wahrung der Zugfestigkeit trotz einseitiger Laschenöffnung, wenn eine Materialbrücke in Längsrichtung der Lasche vorgesehen ist und jeder Haltevorsprung sozusagen zweiteilig bzw. mit Unterbrechung z.B. in der Höhenmittelebene der Lasche gestaltet ist.

Eine geeignete Laschenöffnung sollte aus Festigkeitsgründen einen kantenfreien Grundriss in der Laschen-Hauptebene bzw. Verschwenkebene aufweisen. Der Grundriss kann vorzugsweise im Wesentlichen elliptisch, jedenfalls vollständig gerundet ausgeführt sein.

Vorzugsweise ist die Laschenöffnung im Grundriss exakt passend bzw. bündig zum freien Ende des Haltevorsprungs ausgeführt, d.h. der dem Überlappungsbereich zugewandte Rand der Laschenöffnung fluchtet jeweils deckungsgleich mit dem vorstehenden Rand des Haltevorsprungs. Dies vermeidet u.a. einen unerwünschten Spalt zum Innenraum.

Die geringe Wirklänge des Haltevorsprungs bietet gegenüber EP 0 803 032 B1 mehr Gestaltungsfreiheit hinsichtlich der Schwenkanschläge bei beiden Laschentypen. In einer Ausführungsform weist z.B. ein Überlappungsbereich mindestens drei, vorzugsweise vier Anschlagvorsprünge auf, die einstückig mit dem Laschenkörper hergestellt sind und die jeweils zwei voneinander abgewandte ebene, vorzugsweise zur Verschwenkebene senkrechte Anschlagflächen bilden. Entsprechend dazu kann der komplementäre Überlappungsbereich mindestens drei, vorzugsweise vier entsprechende Anschlagtaschen zur Aufnahme der Anschlagvorsprünge aufweisen, die z.B. im Laschenkörper als Aussparungen vorgesehen sind und jeweils zwei gegenüberliegende ebene, vorzugsweise zur Verschwenkebene senkrechte Anschlagflächen zur Schwenkwinkelbegrenzung mit einer entsprechenden Anschlagfläche eines Anschlagvorsprungs bilden. Die Anschlagvorsprünge bzw. Anschlagtaschen sind dabei vorzugsweise gleichmäßig bzw. rotationssymmetrisch um die Schwenkachse verteilt. Es ist also insbesondere möglich, Anschlagelemente wie Anschlagvorsprünge und Anschlagtaschen ganz oder teilweise im inneren Teilbereich jedes Überlappungsbereichs anzuordnen, insbesondere im Vierteilkreis bzw. Quadranten um die Schwenkachse, die den Mittelbereich der Lasche bzw. den Haltevorsprung selbst erfasst. Zudem erhöht eine größere Anzahl Anschlagflächen und damit Gesamtfläche auch die Belastbarkeit bzw. freitragende Länge.

In einer Ausführungsform hat jeweils der Überlappungsbereich, welcher mit seinem Führungsbereich in den Freiraum des Haltevorsprungs eingreift, die Anschlagvorsprünge sowie einen einstückig hergestellten Schwenkzapfen. Dabei können die Anschlagvorsprünge und der Schwenkzapfen bzw. die Schwenkaufnahme in Querrichtung seitlich versetzt zum Führungsbereich liegen und/oder entgegengesetzt zum Haltevorsprung aus der Schwenkebene vorstehen.

Zur Vermeidung von Störkanten steht der Haltevorsprung vorzugsweise seitlich nicht über die äußere Fläche der Lasche hervor. Der Haltevorsprung kann dabei seitlich nach außen oder innen an der Kettenlasche angeordnet sein und bevorzugt bündig mit der äußeren Laschenfläche abschließen. Beim ersten Typ werden Haltevorsprünge vorzugsweise zumindest an der Außenseite des Mittelbereichs der Innenlasche angeordnet. Bei gekröpften Laschen kann der Haltevorsprung insbesondere an der Laschen-Innenseite des Mittelbereichs vorgesehen sein.

Vorzugsweise hat der Haltevorsprung eine innere Haltefläche zum Überlappen des Führungsbereichs, welche zumindest überwiegend, insbesondere weitestgehend bzw. vollständig parallel zur Verschwenkebene ausgeführt ist. Die innere Haltefläche kann dank der erfindungsgemäßen Dimensionierung des Haltevorsprungs insbesondere ohne innenseitige Einführschräge ausgeführt werden.

Hinsichtlich günstiger Anordnung und Dimensionierung des Haltevorsprungs sieht eine Weiterbildung vor, dass jeder Haltevorsprung spiegelsymmetrisch zur Laschen-Längsmittelebene ausgeführt ist und/oder jeder Haltevorsprung mittig in Bezug auf die Laschenhöhe angeordnet ist, insbesondere jeweils mit einem gleichen Abstand zu den gegenüberliegenden Schmalseiten der Lasche, beides dient u.a. der Vermeidung von Torsionskräften im Betrieb. Bevorzugt hat jeder Haltevorsprung eine wirksame Höhenabmessung, die vorzugsweise maximal 40% der Laschenhöhe beträgt. Die wirksame Höhenabmessung bezeichnet dabei die Höhe, welche tatsächlich vom passenden Führungsbereich hintergriffen werden kann.

Weiterhin kann beidseitig spiegelsymmetrisch zum Haltevorsprung jeweils ein vorsprungfreier Querwandbereich liegen, der insbesondere im Wesentlichen senkrecht zur Verschwenkebene verläuft und an den Haltevorsprung angrenzt. Jeder Querwandbereich verläuft bevorzugt konkav zur benachbarten Schwenkachse, insbesondere mit zumindest in einem an den Haltevorsprung angrenzenden Abschnitt kreisbogenförmigen Verlauf, mit geringem Spalt zum gegenüberliegenden Führungsbereich der eingreifenden Lasche. Jeder vorsprungfreie Querwandbereich kann jeweils eine Winkelweite in Umfangsrichtung um die benachbarte Schwenkachse aufweisen, die größer oder gleich dem wirksamen Überdeckungswinkel des Haltevorsprungs ist. Im Falle einer Laschen-Öffnung können solche vorsprungfreien Querwandbereiche zur Laschenmitte hin an dieser Öffnung enden.

In einer Ausführungsform hat der zur benachbarten Schwenkachse vorstehende Rand des Haltevorsprungs mindestens einen Teilabschnitt, welcher im Wesentlichen konvex zur Schwenkachse ausgebaucht ist. Eine konvexe Ausbauchung hat den Vorteil, dass für das Zusammenfügen keine exakte Ausrichtung erforderlich ist und dabei maximale Fläche des Übergriffs erzielbar ist. Der mittlere Höhenabschnitt des Randes kann konvex gekrümmt oder auch z.B. geradlinig ausgeführt sein. Der vorstehende Rand sollte in Längsrichtung jeweils nicht weiter überstehen, als es der erzielbare maximale Einführwinkel zulässt.

Weiterhin kann vorgesehen sein, dass der kreisbogenförmige Führungsbereich zum Eingriff hinter den Haltevorsprung ein stirnseitig am Überlappungsbereich vorstehendes Kreisbogensegment ist, das über dessen im Wesentlichen gesamte Bogenlänge bzw. Winkelweite (evtl. ausgenommen Endübergänge) durchgehend gleichbleibenden Querschnitt aufweist. Bevorzugt springt dieser Querschnitt gegenüber der Außenfläche des Überlappungsbereichs zurück bzw. seine kleinste Wandstärke ist gegenüber dem angrenzenden Bereich des Überlappungsbereichs geringer. Weiterhin kann das Kreisbogensegment außenseitig eine ebene Außenfläche und innenseitig eine Einführschräge, vorzugsweise eine zum Stirnende verjüngend zulaufende, insbesondere konische, Innenfläche aufweisen, um den Einführ- bzw. Steckwinkel weiter zu vergrößern. Weiterhin kann das Kreisbogensegment gegenüber dem angrenzenden Teil des Überlappungsbereichs eine geringere Dicke aufweisen, welche nur einen Bruchteil, insbesondere maximal 50% der größten Wandstärke des angrenzenden Teils des Überlappungsbereichs (dort wo dieser keine Materialaussparung aufweist) betragen sollte. Weiterhin können der kreisbogenförmige Führungsbereich und der Schwenkzapfen bzw. die Schwenkaufnahme in Querrichtung seitlich versetzt zueinander an der Lasche angeordnet sein, d.h. parallel zur Schwenkebene gesehen nicht überschneidend.

Grundsätzlich können der Haltevorsprung und/oder der Führungsbereich so angeordnet sein, dass der Führungsbereich im Wesentlichen über den gesamten Bereich des relativen Verschwenkwinkels zweier schwenkbar verbundener Laschen in den Freiraum des Haltevorsprungs eingreift, d.h. in jeder bestimmungsgemäßen Schwenkstellung seitlich vom Haltevorsprung gehalten ist. Dies erlaubt auch eine langlebige seitlich bzw. horizontal freitragende Verwendung der Energiekette.

Besonders vorteilhaft anwendbar sind die vorstehenden Ausführungsformen auf Kettenlaschen für Energieketten, die einstückig aus einem spritzgussfähigen Kunststoff, insbesondere aus faserverstärktem Thermoplast, hergestellt sind.

Die Erfindung betrifft neben einer Energieführungskette des ersten oder zweiten Typs auch die einzelnen Kettenlaschen hierfür sowie deren paarweise Verbindung, jeweils mit der erfindungsgemäßen Seitenstabilisierung.

Weitere Merkmale und Vorteile der Erfindung sind ohne Beschränkung des Schutzumfangs der nachfolgenden, ausführlicheren Beschreibung bevorzugter Ausführungsbeispiele anhand der beiliegenden Figuren zu entnehmen. Diese zeigen rein beispielhaft:
FIG.1A-1C: Ansichten einer Innenlasche einer erfindungsgemäßen ersten Ausführungsform in Seitenansicht von der dem Ketteninneren abgewandten Außenseite (FIG.1A) und von der Innenseite (FIG.1B) sowie in einem Teillängsschnitt (FIG.1C) durch zwei symmetrische Haltevorsprünge nach Schnittlinie C-C aus FIG.1B;
FIG.2A-2B: perspektivische Ansichten einer Außenlasche passend zur Innenlasche nach FIG.1A-1C, von der Außenseite (FIG.2A) und von der Innenseite (FIG.2B);
FIG.3A: eine perspektivische Ansicht eines Laschenpaars mit einer Innenlasche nach FIG.1A-1C und einer Außenlasche nach FIG.2A-2B;
FIG.3B: einen Teillängsschnitt entsprechend FIG.1C, jedoch mit eingefügter Außenlasche wie in FIG.3A gezeigt, zur Veranschaulichung der Seitenstabilisierung durch Hintergreifen des Haltevorsprungs; und
FIG.4: eine schematische Seitenansicht von der Außenseite zu einer gekröpften Lasche gemäß einem zweiten Ausführungsbeispiel.

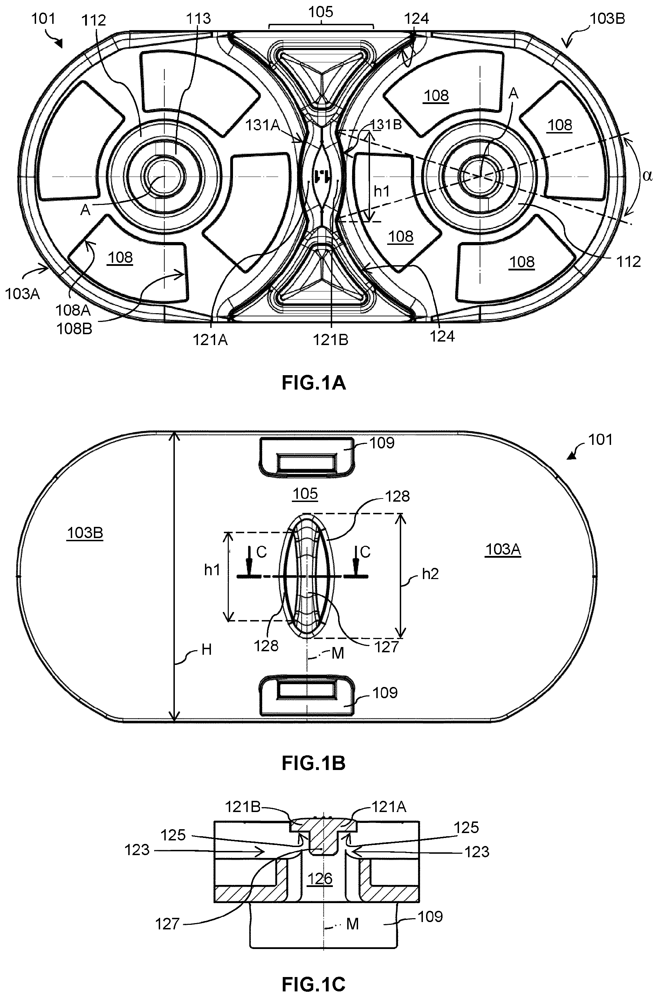

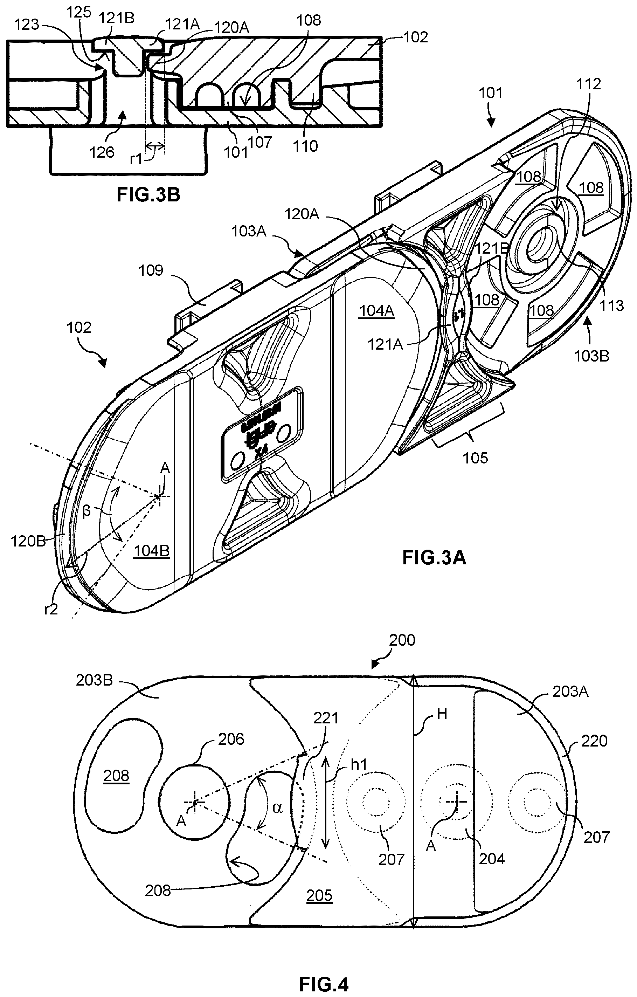

FIG.1A-3A zeigen, in einer ersten Ausführungsform, eine Innenlasche 101 und eine Außenlasche 102 zum Aufbau eines Laschenstrangs (vgl. FIG.3A) einer Energieführungskette durch alternierende Verkettung von Innen- und Außenlaschen 101, 102. Zu an sich bekannten Einzelheiten von Energieführungsketten mit unterschiedlichen Innen- und Außenlaschen wird zur Verkürzung auf WO 98/46906 A1, EP 0 803 032 B1 oder WO 95/04231 A1 verwiesen, deren diesbezügliche Lehre durch Bezugnahme hier einbegriffen ist.

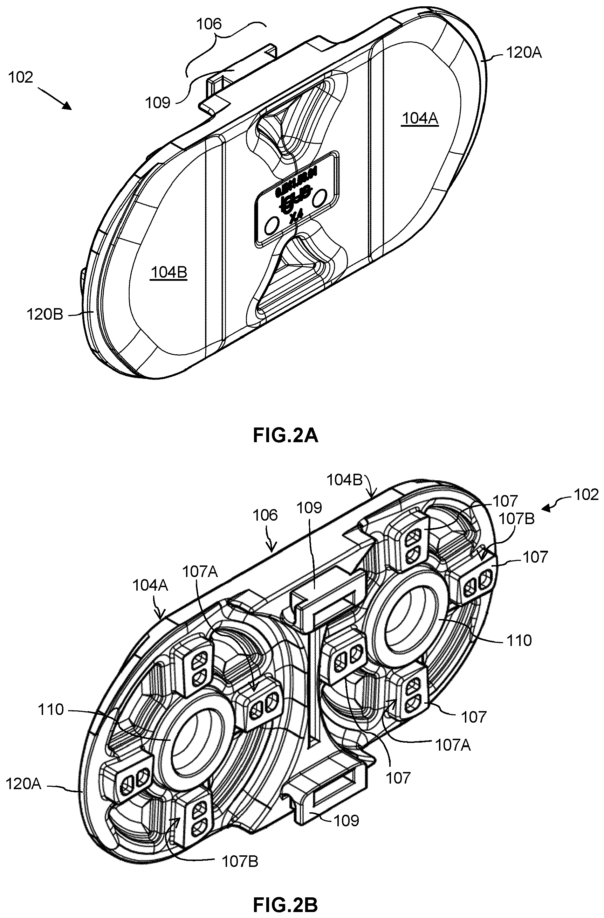

Die Innenlaschen 101 weisen zwei zur Querschnittsebene durch die Laschenmitte (Laschen-Höhenmittelebene M) spiegelsymmetrische Überlappungsbereiche 103A, 103B auf, die zum Inneren der Energieführungskette zugewandt eine geschlossene Fläche bilden (FIG.1B). Die Überlappungsbereiche 103A, 103B wirken mit komplementären, spiegelsymmetrischen Überlappungsbereichen 104A, 104B der Außenlasche 102 (FIG.2A-2B) zusammen. Zwischen den Überlappungsbereichen 103A, 103B bzw. 104A, 104 liegt jeweils ein Mittelbereich 105 bzw. 106 der nach außen bzw. innen vorsteht und bereichsweise eine größere Wandstärke hat.

Zur Bildung einer Gelenkverbindung, mittels welcher die Laschen 101, 102 gelenkig in einer Ebene (Ebene von FIG.1A/1B) jeweils um ihre Schwenkachse A (senkrecht zur Ebene von FIG.1A/1B) verschwenkbar verbunden werden, haben die Außenseiten der Überlappungsbereiche 103A, 103B jeweils eine zentrale Zapfenaufnahme 112 koaxial zur Schwenkachse A, in welche jeweils ein passender zentraler Schwenkzapfen 110 des überlappenden Überlappungsbereichs 104A, 104B einer Außenlasche 102 eingreift. Der Schwenkzapfen 110 ist hier an der Außenlasche 102 in Art einer Hohlwelle materialsparend ausgeführt und steht einstückig zentral von der Innenseite der Überlappungsbereiche 104A, 104B (FIG.2B) vor. So kann ein weiterer Zapfen 113, welcher koaxial in der Zapfenaufnahme 112 vorsteht, in den Hohlraum des Schwenkzapfens 110 eingreifen um die Zugfestigkeit des Gelenks zu steigern. Zu beachten ist insbesondere der vergleichsweise große äußere Durchmesser des Schwenkzapfens 110, der hier z.B. ≥ 35% der Laschenhöhe H beträgt. In an sich bekannter Weise werden Kettenglieder durch Verbinden von zwei gegenüberliegenden Innenlaschen 101 und Außenlaschen 102 mittels Querstegen hergestellt. Dazu werden an Befestigungshörnern 109 baugleiche Querstege (nicht gezeigt) montiert, deren Länge die Innenbreite vorgibt. Die baugleichen Befestigungshörner 109 stehen zur Innenseite vor und befinden sich im Mittelbereich 105 bzw. 106 mittig auf der halben Teilungslänge. Geeignete Querstege sind an ihren Enden vorzugsweise so aufgeweitet, dass jeweils am Mittelbereich 106 der Außenlasche 102 befestigte Querstege die Innenwand des angrenzenden Überlappungsbereichs 103A, 103B der Innenlasche 101 übergreifen.

Zur Begrenzung des Schwenkwinkels bzw. Einstellung des Kettenradius im Umlenkbogen der Energieführungskette (nicht gezeigt) oder einer Vorspannung, sind an der Innenseite der Außenlasche 102 parallel zum Schwenkzapfen 110 vorstehend hier jeweils vier identische Anschlagvorsprünge 107 vorgesehen. Die Anschlagvorsprünge 107 sind mit dem Körper der Außenlasche 102 einstückig hergestellt und rotationssymmetrisch bzw. gleichmäßig um die Schwenkachse A verteilt. Jeder Anschlagvorsprung 107 ist im Querschnitt etwa trapezförmig und bildet an den langen Seiten jeweils zwei erste, überwiegend planebene Anschlagflächen 107A, 107B, die voneinander abgewandt sind. Dazu passend hat jeder der Überlappungsbereiche 103A, 103B der Innenlasche 101 vier zur Schwenkachse A rotationssymmetrische Anschlagtaschen 108 zur Aufnahme der Anschlagvorsprünge 107. Die Anschlagtaschen 108 sind hier im Laschenkörper als Aussparungen bzw. Ausnehmungen an der Außenseite der Überlappungsbereiche 103A, 103B (FIG.1A) der Innenlasche vorgesehen. Jede Anschlagtasche 108 bildet überwiegend ebene Gegenanschlagflächen 108A, 108B für die korrespondierenden Anschlagflächen 107A, 107B am eingreifenden Anschlagvorsprung 107. Der Schwenkwinkelbereich wird u.a. durch die offene Winkelweite um die Schwenkachse A zwischen den gegenüberliegenden Gegenanschlagflächen 108A, 108B bestimmt. Die Gegenanschlagflächen 108A, 108B sind zudem durch Taschenböden stabil verbunden, welche die Anschlagtaschen 108 zur Innenseite schließen (vgl. FIG.1B). Eine Vertauschung mit Anschlagvorsprüngen und Schwenkzapfen an der Innenlasche und entsprechenden Aufnahmen an der Außenlasche wäre prinzipiell gleichwertig.

Zu beachten ist im Vergleich zum nächstliegenden Stand der Technik hier insbesondere, dass in der dem Mittelbereich 105 zugewandten inneren Hälfte jedes Überlappungsbereichs 103A, 103B eine Anschlagtasche 108 vorgesehen ist, in welche auch - wie unten ersichtlich - ein entsprechender Anschlagvorsprung 107 in der inneren Hälfte am Überlappungsbereich 104A, 104B der Außenlasche 102 eingeführt werden kann. Diese Lage ist wegen der Verstärkung durch den Mittelbereich 105, 106 für die Festigkeit vorteilhaft. Eine entsprechende rotationssymmetrische Anschlaganordnung ist auch mit nur drei Anschlagvorsprüngen 107 und den korrespondierenden Anschlagtaschen 108 möglich.

FIG.3A zeigt den zusammengefügten Zustand von zwei Laschen 101, 102. Hierbei ist eine Innenlasche 101 mit einer Außenlasche 102 schwenkbar, anschlagswirksam und kraftübertragend verkettet, sodass der Schwenkzapfen 110 in die Zapfenaufnahme 112 und die Anschlagvorsprünge 107 in die Anschlagtaschen 108 eingreifen. Zur Seitenstabilisierung greift die Außenlasche 102 mit einem von zwei symmetrischen, parallel zur Verschwenkebene erstreckten Führungsbereichen 120A hinter einen Haltevorsprung 121A, der außenseitig am Mittelbereich 105 vorgesehen ist. Am Mittelbereich 105 der Innenlasche 101 sind spiegelsymmetrisch zur Laschen-Höhenmittelebene zwei gleichartige Haltevorsprünge 121A, 121B vorgesehen, jeweils für einen Führungsbereich 120A bzw. 120B von zwei mit dieser Innenlasche 101 verbundenen Außenlaschen 102. Die Haltevorsprünge 121A, 121B sind im Wesentlichen parallel zur Schwenkebene angeordnet und springen in Richtung der jeweils benachbarten Schwenkachse vom Mittelbereich 105 hervor. FIG.3A zeigt die gestreckte Relativstellung beider Laschen 101, 102, der Hintergriff des Führungsbereichs 120A bleibt jedoch flächenmäßig gleich über den gesamten Schwenkbereich bis hin zur vollständig verschwenkten Relativstellung (nicht gezeigt). Die Führungsbereiche 120A, 120B sind jeweils Kreisbogensegmente um die Schwenkachse A und bilden einen stirnseitigen äußeren Endbereich des jeweiligen Überlappungsbereichs 104A, 104B der Außenlasche 102, welcher an den Mittelbereich 105 der Innenlasche 101 angrenzt. Jeder der endseitigen Führungsbereiche 120A, 120B hat in Seitenansicht die Form eines Kreisbogensegments und ist mit im Wesentlichen durchgehend gleichbleibendem Querschnitt ausgeführt, wobei innenseitige Einführschrägen im mittleren Bereich (vgl. FIG.2B) möglich sind. Wie FIG.3B veranschaulicht, springt jeder Führungsbereich 120A, 120B im Querschnitt gegenüber der Außenfläche der Lasche 102, insbesondere gegenüber dem angrenzenden Querschnitt des Überlappungsbereichs 104A, 104B stufenförmig zurück, ggf. mit einem schrägen oder gerundetem Übergang (vgl. FIG.2A).

Jeder Haltevorsprung 121A, 121B ist zur Längs- und Höhenmittelebene der Innenlasche 101 symmetrisch und erstreckt sich räumlich beschränkt auf einen mittleren Höhenabschnitt der Laschenhöhe H, mit einer zum Eingriff nutzbaren bzw. wirksamen Höhenabmessung h1 (vgl. FIG.1B), wobei das Verhältnis h1/H bevorzugt <40%, hier z.B. ca. 30%, beträgt. Weiterhin ist jeder Haltevorsprung 121A, 121B auch in Umfangsrichtung bzw. Schwenkrichtung um die Schwenkachse A betrachtet begrenzt dimensioniert. Diese Dimensionierung des Haltevorsprungs 121A, 121B ist so gewählt, dass der eingreifende, kreisbogenförmige Führungsbereich 120A, 120B stets lediglich über einen kleineren Anteil, z.B. <40% besonders bevorzugt ≤33%, seiner Bogenlänge bzw. Winkelweite vom Haltevorsprung 121A, 121B übergriffen ist (vgl. FIG.3B). In FIG.1A (rechts) ist beispielhaft die vergleichsweise kleine wirksame Winkelweite α, hier ca. 30°, des Haltevorsprungs 121A, 121B veranschaulicht. Die Winkelweite α bezeichnet dabei den Winkel eines Strahls durch den Anfangspunkt des Eingriffs unter den Haltevorsprung 121A, 121B und eines Strahls durch den entsprechenden Endpunkt, mit der Schwenkachse A als Scheitelpunkt des Winkels. Entsprechend betrachtet ist der Führungsbereich 120A, 120B stets bezogen auf seine insgesamt nutzbare Bogenlänge bzw. Winkelweite β, hier ca. 90°, mit einem überwiegenden Anteil (β-α) nicht vom zugeordneten Haltevorsprung 121A, 121B übergriffen, wie aus FIG.3A beispielhaft für die Strecklage ersichtlich. Die nutzbare Winkelweite β der Führungsbereiche 120A, 120B ist vom gewünschten Schwenkbereich der Laschen zueinander bzw. Krümmungsradius der Energieführungskette abhängig und liegt typisch zwischen ca. 90° bis ca. 150° und ggf. bis fast 180°. Der Haltevorsprung 121A, 121B ist in Umfangsrichtung vorzugsweise auf eine maximal hintergreifbare Winkelweite α ≤ 45° beschränkt.

Wie ein Vergleich der vergrößerten Teilquerschnitte in FIG.1C (nur Innenlasche 101) und FIG.3B (Innenlasche 101 und Außenlasche 102 zusammengefügt) am besten verdeutlicht, greift der Führungsbereich 120A bzw. 120B stets mit geringfügigem Bewegungsspiel quer zur Schwenkebene in einen Freiraum 123 hinter den jeweiligen Haltevorsprung 121A bzw. 121B. Hierin wird der Führungsbereich 120A bzw. 120B bei Querbelastung in seitlicher Richtung durch eine ebene Innenfläche 125 an der dem Ketteninneren zugewandten Rückseite des Haltevorsprungs 121A, 121B anschlagen bzw. gehalten. Die Innenflächen 125 verlaufen parallel zur Schwenkebene. Dementsprechend ist die äußere Flanke der Führungsbereiche 120A, 120B jeweils eben und parallel zur Schwenkebene, d.h. entsprechend einem Sektor einer Kreisscheibe ausgeführt.

Wie FIG.3B zeigt, ist dabei die radiale Eingrifftiefe r1 (FIG.3B) des Führungsbereichs 120A, 120B in den vom Haltevorsprung 121A, 121B überdeckten Freiraum 123 möglichst klein, aber für die gewünschte Seitenstabilität ausreichend gewählt. Durch geeignet geringen Überstand des Haltevorsprungs 121, 121B (FIG.3B) ist die maximale Eingrifftiefe r1 in der Laschen-Längsmittelebene (vgl. Schnittebene C-C in FIG.1B) z.B. ≤ 15%, bevorzugt ≤ 12,5% des Kreisbogenradius r2 (FIG.3A) des Führungsbereichs 120A, 120B eingestellt.

FIG.1C und FIG.3B zeigen weiterhin eine durch den Mittelbereich 105 der Innenlasche 101 erstreckte Laschenöffnung 126, welche jeder Haltevorsprung 121A, 121B zumindest seitlich überdeckt. Die Laschenöffnung 126 erstreckt sich senkrecht zur Schwenkebene bzw. parallel zur Schwenkachse A bis zur abgewandten Seitenfläche der Innenlasche 101, wie FIG.1B zeigt, und mündet dort ggf. unter Aufweitung. Im gezeigten Ausführungsbeispiel überdecken beide Haltevorsprünge 121A, 121B seitlich eine zusammenhängende bzw. gemeinsame Laschenöffnung 126 durch den Mittelbereich 105. Die Laschenöffnung 126 geht offen in die Freiräume 123 über bzw. umfasst diese. Dementsprechend kann beim Montieren der Führungsbereich 120A, 120B jeweils schräg geringfügig in die Laschenöffnung 126 hineinragen. Wie FIG.1A-1C zeigen, hat die Laschenöffnung 126 einen kantenfreien, hier im Wesentlichen elliptischen Grundriss in der Laschenhauptebene (FIG.1B). Der dem Überlappungsbereich zugewandte Rand 128 der Laschenöffnung 126 fluchtet jeweils beidseitig deckungsgleich mit dem vorstehenden Rand 131A, 131B des Haltevorsprungs 121A, 121B. Die sacklochartige Laschenöffnung 126 erlaubt eine vereinfachte Herstellung der Innenlasche 101, insbesondere der Haltevorsprünge 121A, 121B, mit einfachen Spritzguss-Formwerkzeugen ohne Schieber. Hierzu ist lediglich eine zur Laschenöffnung 126 konjugierte Positivform als feststehender Vorsprung in einer Formhälfte erforderlich, deren Formgebung die Rückseite der Haltevorsprünge 121A, 121B, insbesondere die inneren Halteflächen 125 definiert. Dabei wird vorzugsweise einstückig zwischen den Halteflächen 125 bzw. am Stirnende der Laschenöffnung 126 eine verstärkte Materialbrücke 127 mitgeformt, von welcher die Haltevorsprünge 121A, 121B seitlich abstehen. Im gezeigten Ausführungsbeispiel überbrückt die Materialbrücke 127 die Laschenöffnung 126 in Richtung der Laschenhöhe H und dient zur Verstärkung der Haltevorsprünge 121A, 121B gegen Querkräfte. Aufgrund der Materialbrücke 127 sind die Haltevorsprünge 121A, 121B mittels einem Bereich vergleichsweise größerer Materialstärke mit dem Rest der Lasche verbunden.

Wie FIG.1A zeigt, bildet der Mittelbereich 105 der Innenlasche jeweils spiegelsymmetrisch zur Laschen-Längsmittelebene (vgl. C-C in FIG.1B) und Laschen-Höhenmittelebene M zwei vorsprungfreie Querwandbereiche 124 in Kreisbogenform um die Schwenkachse. Jeder Haltevorsprung 121A, 121B endet jeweils beidseitig in einem Übergang zu einem entsprechenden vorsprungfreien Querwandbereich 124, dessen Winkelweite vorzugsweise größer ist als die des jeweiligen Haltevorsprungs 121A, 121B. Jeder Querwandbereich 124 reicht dabei vom Haltevorsprung 121A, 121B jeweils bis fast zur entsprechenden Schmalseite der Innenlasche 101. Die stirnseitigen Querwandbereiche 124 des Mittelbereichs 105 stehen senkrecht zur Laschenhauptebene und gehen ggf. mit einem gerundeten bzw. kantenfreien Übergang in die Überlappungsbereiche 103A, 103B über.

Wie FIG.1A weiter veranschaulicht, ist der jeweils zur benachbarten Schwenkachse A vorstehende Rand 131A, 131B des Haltevorsprungs 121A, 121B konvex zur Schwenkachse A hin ausgebaucht, entsprechend deckungsgleich mit dem Grundriss der Laschenöffnung 126.

FIG.4 zeigt, als weiteres Ausführungsbeispiel, in Seitenansicht ganz schematisch eine gekröpfte Kettenlasche 200, die einteilig aus Kunststoff in Spritzgusstechnik hergestellt ist. Der nach außen gekröpfte Überlappungsbereich 203A hat an seiner Innenseite einen einstückig mit der Kettenlasche 200 geformten Gelenkzapfen 204, zum Eingriff (senkrecht zur Ebene in FIG.4) in eine Gelenkaufnahme 206 im nach innen gekröpften Überlappungsbereich 203B einer angrenzenden baugleichen Kettenlasche, zur Bildung eines Schwenkgelenks um die jeweilige Schwenkachse A. Der Überlappungsbereich 203A hat weiterhin an seiner Innenseite zwei einteilig vorstehende, hier zylindrische Anschlagvorsprünge 207, welche diametral zur Schwenkachse A gegenüberliegend auf der Laschen-Längsmittelebene angeordnet sind. Die Anschlagvorsprünge 207 greifen zur Schwenkwinkelbegrenzung in zwei entsprechende bogenförmige Ausnehmungen 208 an der Außenseite des Überlappungsbereichs 203B einer angrenzenden Kettenlasche 200. Bemerkenswert ist vorliegend die Anordnung jeweils eines Anschlagvorsprungs 207 und einer korrespondierenden Ausnehmung 208 in der inneren Hälfte der Überlappungsbereiche 203A, 203B in unmittelbarer Nähe zum verstärkten Mittelbereich 205. Dies wird ermöglicht durch erfindungsgemäße Dimensionierung eines zur Seitenstabilisierung vorgesehenen Haltevorsprungs 221. Der Haltevorsprung 221 am Mittelbereich 205 bildet hier eine kreisbogenförmige Nut für den Eingriff eines sich parallel zur Verschwenkebene erstreckenden Führungsbereichs 220 am stirnseitigen Ende des Überlappungsbereichs 203A einer angrenzenden baugleichen Lasche. Der Führungsbereich 220 ist in FIG.4 beispielhaft als über 180° umlaufendes, vorspringendes Kreissegment ausgeführt und hat zumindest relativ zur größeren Wandstärke des Mittelbereichs 205 eine geringere Wandstärke.

Der Haltevorsprung 221 zur Seitenstabilisierung steht einstückig vom Mittelbereich 205 vor und ist in Umfangsrichtung um die Schwenkachse ebenfalls begrenzt dimensioniert, z.B. mit im Vergleich zum Führungsbereich 220 erheblich kleinerer Winkelweite α und auf einen nur kleinen mittleren Anteil h1 der Laschenhöhe H erstreckt. Somit wird auch hier, analog zu FIG.1A-3B, der kreisbogenförmige Führungsbereich 220 überwiegend nicht vom Haltevorsprung 221 übergriffen. Dies erlaubt u.a. einen größeren Einführwinkel beim Zusammenfügen zweier gekröpfter Kettenlaschen 200 nach FIG.4, wodurch wiederum größere Gestaltungsfreiheit hinsichtlich Lage und Dimensionierung, insbesondere der Anschlagvorsprünge 207 und zugehöriger Ausnehmungen 208, ermöglicht wird. Bezüglich sonstiger an sich bekannter Merkmale gekröpfter Laschen wird hier beispielhaft die Lehre aus DE 3 531 066 C2 einbezogen.

Trotz räumlich begrenzter und materialsparender Dimensionierung erzielen erfindungsgemäße Haltevorsprünge 121A, 121B bzw. 221 eine hohe Stabilität gegen Kippen, Aufbiegen oder Ausbrechen verbundener Laschen aus der Schwenkebene.

### Bezugszeichenliste

**FIG.1A-3A**
   101 Innenlasche
   102 Außenlasche
   103A, 103B Überlappungsbereich (Innenlasche)
   104A, 104B Überlappungsbereich (Außenlasche)
   105 Mittelbereich (Innenlasche)
   106 Mittelbereich (Außenlasche)
   107 Anschlagvorsprung
   107A, 107B Anschlagflächen
   108 Anschlagtasche
   108A, 108B Gegenanschlagflächen
   109 Befestigungshorn (für Quersteg)
   110 Schwenkzapfen
   112 Zapfenaufnahme (Schwenkzapfen)
   120A, 120B Führungsbereich
   121A, 121B Haltevorsprung
   123 Freiraum
   124 Querwandbereich
   125 innere Haltefläche
   126 Laschenöffnung
   127 Materialbrücke
   128 Rand (Laschenöffnung)
   131A, 131B konvexer Rand (Haltevorsprung)
   α Winkelweite (Haltevorsprung: FIG.1A)
   β nutzbare Winkelweite (Führungsbereich: FIG.3A)
   A Schwenkachse
   H Laschenhöhe
   h1 wirksame Höhenabmessung
   M Laschen-Höhenmittelebene
   r1 radiale Eingrifftiefe (FIG.3B)
   r2 Kreisbogenradius (Führungsbereich: FIG.3A)
**FIG.4**
   200 gekröpfte Kettenlasche
   203A, 203B Überlappungsbereich
   204 Gelenkzapfen
   205 Mittelbereich
   206 Gelenkaufnahme
   207 Anschlagvorsprung
   208 Ausnehmung
   220 Führungsbereich
   221 Haltevorsprung
   α Winkelweite (Haltevorsprung)
   A Schwenkachse
   H Laschenhöhe
   h1 wirksame Höhenabmessung

## Patentansprüche

1. Energieführungskette zur Führung von Leitungen, wie Schläuchen, Kabeln oder dgl., zwischen zwei Anschlussstellen, mittels Kettengliedern, die jeweils zwei gegenüberliegende Laschen, insbesondere aus Kunststoff, umfassen, die über mindestens einen Quersteg miteinander verbunden sind, wobei die Energieführungskette zwei Laschenstränge jeweils mit alternierend aufeinanderfolgenden Innenlaschen (101) und Außenlaschen (102) aufweist, wobei die Innenlaschen dem Ketteninneren zugewandte innere Überlappungsbereiche (103A, 103B) und die Außenlaschen äußere Überlappungsbereiche (104A, 104B) aufweisen, mit denen benachbarte Laschen jeweils überlappen und gelenkig in einer Ebene um eine Schwenkachse (A) und über einen Verschwenkwinkel verschwenkbar miteinander verbunden sind, wobei von jeweils zwei im Laschenstrang benachbarten Laschen, die eine Lasche (102) mit einem sich parallel zur Verschwenkebene erstreckenden, kreisbogenförmigen Führungsbereich (120A, 120B) in einen Freiraum (123) hinter einen Haltevorsprung (121A, 121B) zur Seitenstabilisierung an der anderen Lasche eingreift, **dadurch gekennzeichnet, dass** der Haltevorsprung (121A, 121B) räumlich beschränkt auf einen mittleren Höhenabschnitt (h1) der Laschenhöhe und in Umfangsrichtung um die Schwenkachse (A) begrenzt dimensioniert ist,
dass der Führungsbereich (120A, 120B) so angeordnet ist, dass der Führungsbereich (120A, 120B) im Wesentlichen über den gesamten Verschwenkwinkel in den Freiraum (123) des Haltevorsprungs eingreift und
dass der Haltevorsprung (121A, 121B) begrenzt dimensioniert ist sodass in jeder Schwenkstellung der kreisbogenförmige Führungsbereich (120A, 120B) lediglich über einen kleineren Anteil (α) einer Bogenlänge bzw. Winkelweite des Führungsbereichs (120A, 120B) vom Haltevorsprung (121A, 121B) übergriffen ist und sodass in jeder Schwenkstellung der kreisbogenförmige Führungsbereich (120A, 120B) über einen überwiegenden Anteil der Bogenlänge bzw. Winkelweite des Führungsbereichs (120A, 120B) vom Haltevorsprung (121A, 121B) nicht übergriffen (β-α) ist.

2. Kunststofflasche, vorzugsweise Innenlasche (101), für eine Energieführungskette nach Anspruch 1, umfassend zwei gegenüberliegende Überlappungsbereiche (103A; 103B) und einen dazwischenliegenden Mittelbereich (105), wobei jeder Überlappungsbereich entweder einen mit diesem einstückigen Schwenkzapfen oder eine in diesem geformte Zapfenaufnahme (112) aufweist, um überlappende Laschen (101; 102) in einer Ebene um eine Schwenkachse (A) und über einen Verschwenkwinkel verschwenkbar miteinander zu verbinden, und wobei einstückig am Mittelbereich (105) jeweils zwei Haltevorsprünge (121A, 121B) vorgesehen sind und jeder Haltevorsprung über einen zugehörigen Freiraum (123) vorspringt, in welchen eine angrenzende Außen- oder Innenlasche (101; 102) mit einem sich parallel zur Verschwenkebene erstreckenden, kreisbogenförmigen Führungsbereich (120A, 120B) zur Seitenstabilisierung eingreifen kann
**dadurch gekennzeichnet, dass**
jeder Haltevorsprung (121A, 121B) in Umfangsrichtung um die Schwenkachse (A) begrenzt (α) dimensioniert ist, sodass der kreisbogenförmige Führungsbereich (120A, 120B) einer eingreifenden Lasche in jeder Schwenkstellung lediglich über einen kleineren Anteil (α) einer Bogenlänge bzw. Winkelweite des Führungsbereichs (120A, 120B) vom Haltevorsprung (121A, 121B) übergriffen ist und sodass der kreisbogenförmige Führungsbereich (120A, 120B) einer eingreifenden Lasche in jeder Schwenkstellung überwiegend vom Haltevorsprung nicht übergriffen (β-α) ist, wobei der Haltevorsprung (121A, 121B) und der Führungsbereich (120A, 120B) so angeordnet sind, dass der Führungsbereich (120A, 120B) im Wesentlichen über den gesamten Verschwenkwinkel in den Freiraum (123) des Haltevorsprungs (121A, 121B) eingreift.

3. Laschenpaar für eine Energieführungskette, das Laschenpaar umfassend eine Innenlasche (101) nach Anspruch 2 sowie eine Außenlasche (102), wobei jede Lasche zwei gegenüberliegende Überlappungsbereiche (103A, 103B; 104A, 104B) und einen dazwischenliegenden Mittelbereich (105; 106) aufweist und beide Laschen zum einseitigen Überlappen mit ihren Überlappungsbereichen ausgeführt sind; die Außenlasche (102) in jedem Überlappungsbereich (104A, 104B) einen mit diesem einstückigen Schwenkzapfen (110) aufweist und die Innenlasche (101) in jedem Überlappungsbereich (103A, 103B) eine entsprechende in diesem geformte Zapfenaufnahme (112) aufweist, um beide Laschen in einer Ebene um eine Schwenkachse (A) und über einen Verschwenkwinkel schwenkbar miteinander zu verbinden; und
wobei einstückig am Mittelbereich (105) der Innenlasche jeweils zwei Haltevorsprünge (121A, 121B) zur Seitenstabilisierung vorgesehen sind und jeder Haltevorsprung über einen zugehörigen Freiraum (123) vorspringt;
wobei einstückig an jedem Überlappungsbereich (104A, 104B) der Außenlasche (102) stirnseitig ein parallel zur Verschwenkebene erstreckter, kreisbogenförmiger Führungsbereich (120A, 120B) zur Seitenstabilisierung vorgesehen ist und in den Freiraum (123) eines Haltevorsprungs eingreifen kann;
**dadurch gekennzeichnet, dass**
jeder Haltevorsprung (121A, 121B) am Mittelbereich (105) der Innenlasche in Umfangsrichtung um die Schwenkachse (A) begrenzt dimensioniert (α) ist, sodass der kreisbogenförmige Führungsbereich (120A, 120B) der eingreifenden Außenlasche (102) in jeder Schwenkstellung überwiegend nicht vom Haltevorsprung (121A, 121B) übergriffen ist, wobei der Haltevorsprung (121A, 121B) und der Führungsbereich (120A, 120B) so angeordnet sind, dass der Führungsbereich (120A, 120B) im Wesentlichen über den gesamten Verschwenkwinkel in den Freiraum (123) des Haltevorsprungs (121A, 121B) eingreift.

4. Energieführungskette bzw. Kunststofflasche nach einem der Ansprüche 1 bis 3, **dadurch gekennzeichnet,**
**dass** der Haltevorsprung (121A, 121B) begrenzt dimensioniert ist sodass in jeder Schwenkstellung der kreisbogenförmige Führungsbereich (120A, 120B) über einen Anteil <40% der Bogenlänge bzw. Winkelweite des Führungsbereichs (120A, 120B) vom Haltevorsprung (121A, 121B) übergriffen ist und der kreisbogenförmige Führungsbereich (120A, 120B) über einen Anteil ≥60% der Bogenlänge bzw. Winkelweite des Führungsbereichs (120A, 120B) vom Haltevorsprung (121A, 121B) nicht übergriffen (β-α) ist.

5. Energieführungskette bzw. Kunststofflasche nach Anspruch 4, **dadurch gekennzeichnet,**
**dass** der Haltevorsprung (121A, 121B) begrenzt dimensioniert ist sodass in jeder Schwenkstellung der kreisbogenförmige Führungsbereich (120A, 120B) über einen Anteil ≤33% der Bogenlänge bzw. Winkelweite des Führungsbereichs (120A, 120B) vom Haltevorsprung (121A, 121B) übergriffen ist und der kreisbogenförmige Führungsbereich (120A, 120B) über einen Anteil ≥66% der Bogenlänge bzw. Winkelweite des Führungsbereichs (120A, 120B) vom Haltevorsprung (121A, 121B) nicht übergriffen (β-α) ist.

6. Energieführungskette bzw. Kunststofflasche nach einem der Ansprüche 1 bis 5, **dadurch gekennzeichnet,**
**dass** jeder Haltevorsprung (121A, 121B) innerhalb eines von der Längsmittelebene der Lasche halbierten Winkelbereichs α < 60°, vorzugsweise α ≤ 45°, um die benachbarte Schwenkachse (A) angeordnet ist; insbesondere **dadurch gekennzeichnet dass** der Haltevorsprung (121A, 121B) in Umfangsrichtung um die Schwenkachse so begrenzt ist, dass der kreisbogenförmige Führungsbereich in jeder Schwenkstellung über einen maximalen Winkel (α) um die Schwenkachse (A) überdeckt ist, der < 60°, vorzugsweise ≤ 45°, beträgt.

7. Energieführungskette bzw. Kunststofflasche nach einem der Ansprüche 1 bis 6, **dadurch gekennzeichnet, dass** zur Schwenkwinkelbegrenzung jeder Überlappungsbereich (104A, 104B) mehrere Anschlagelemente, umfassend Anschlagvorsprünge (107; 207) oder Anschlagtaschen (108; 208), aufweist und mindestens ein Anschlagelement ganz oder teilweise im inneren Teilbereich jedes Überlappungsbereichs angeordnet, wobei der innere Teilbereich ein Quadrant um die Schwenkachse ist, der den Mittelbereich (105, 106; 205) der Lasche mit dem Haltevorsprung (121A, 121B; 221) selbst umfasst.

8. Energieführungskette bzw. Kunststofflasche nach einem der Ansprüche 1 bis 6, **dadurch gekennzeichnet, dass** die radiale Eingrifftiefe (r1) des Führungsbereichs (120A, 120B) in den vom Haltevorsprung (121A, 121B) überdeckten Freiraum (123) kleiner als 15%, bevorzugt kleiner oder gleich 12,5% des Kreisbogenradius (r2) des Führungsbereichs (120A, 120B) ist.

9. Energieführungskette bzw. Kunststofflasche nach einem der Ansprüche 1 bis 7, **dadurch gekennzeichnet, dass**
- jeder Haltevorsprung (121A, 121B) zumindest teilweise eine Laschenöffnung (126) überdeckt, die sich durch einen bzw. den Mittelbereich (105) der Lasche zur abgewandten Seitenfläche der Lasche erstreckt; und/oder dass
- jeder Haltevorsprung (121A, 121B) über eine Materialbrücke (127), mit im Vergleich zum Haltevorsprung (121A, 121B) größerer Wandstärke, einstückig mit der Lasche verbunden ist;
- insbesondere weiterhin **dadurch gekennzeichnet, dass** zwei Haltevorsprünge (121A, 121B) eine gemeinsame Laschenöffnung (126) durch den Mittelbereich überdecken und vorzugsweise einstückig mit einer verstärkten Materialbrücke (127) über der Laschenöffnung (126) geformt sind.

10. Kunststofflasche nach Anspruch 9, **dadurch gekennzeichnet, dass** die Laschenöffnung (126) einen kantenfreien, vorzugsweise im Wesentlichen elliptischen Grundriss in der Laschenhauptebene und/oder der dem Überlappungsbereich zugewandte Rand (128) der Laschenöffnung (126) jeweils deckungsgleich mit dem vorstehenden Rand (131A, 131B) des Haltevorsprungs fluchtet.

11. Energieführungskette bzw. Kunststofflasche nach einem der vorstehenden Ansprüche, **dadurch gekennzeichnet, dass** zur Schwenkwinkelbegrenzung ein Überlappungsbereich (104A, 104B) mindestens drei, vorzugsweise vier Anschlagvorsprünge (107) aufweist, die jeweils zwei ebene, vorzugsweise zur Verschwenkebene senkrechte Anschlagflächen (107A, 107B) bilden, und der dazu komplementäre Überlappungsbereich (103A, 103B) mindestens drei, vorzugsweise vier entsprechende Aufnahmen (108) aufweist mit jeweils zwei ebenen, vorzugsweise zur Verschwenkebene senkrechten Gegenanschlagflächen (108A, 108B).

12. Energieführungskette bzw. Kunststofflasche nach Anspruch 11, **dadurch gekennzeichnet, dass** jeweils der Überlappungsbereich, welcher mit seinem Führungsbereich in den Freiraum (123) des Haltevorsprungs (121A, 121B) eingreift, die Anschlagvorsprünge sowie einen einstückigen Schwenkzapfen (110) aufweist, wobei die Anschlagvorsprünge (107) und der Schwenkzapfen seitlich versetzt zum Führungsbereich (120A, 120B) und/oder entgegengesetzt zum Haltevorsprung (121A, 121B) aus der Schwenkebene vorstehen.

13. Energieführungskette bzw. Kunststofflasche nach einem der vorstehenden Ansprüche 1 bis 12, **dadurch gekennzeichnet,**
- **dass** der Haltevorsprung (121A, 121B) seitlich nicht über die äußere Laschenfläche vorsteht und/oder bündig mit der äußeren Laschenfläche abschließt; und/oder
- **dass** der Haltevorsprung (121A, 121B) eine innere Haltefläche (125) zum Überlappen des Führungsbereichs bildet, welche weitgehend parallel zur Verschwenkebene ausgeführt ist; und/oder
- **dass** der vorstehende Rand (131A, 131B) des Haltevorsprungs konvex zur Schwenkachse (A) ausgebaucht ist; und/oder
- **dass** der kreisbogenförmige Führungsbereich (120A, 120B) zum Eingriff hinter den Haltevorsprung (121A, 121B) ein stirnseitig am Überlappungsbereich (103A, 103B) vorstehendes Kreisbogensegment aufweist, dessen Querschnitt gegenüber der Außenfläche des Überlappungsbereichs (103A, 103B) zurückspringt.

14. Energieführungskette bzw. Kunststofflasche nach einem der vorstehenden Ansprüche, **dadurch gekennzeichnet,**
- **dass** jeder Haltevorsprung (121A, 121B) spiegelsymmetrisch zur Laschen-Längsmittelebene und/oder Laschen-Höhenmittelebene (M) ausgeführt und/oder mittig in Bezug auf die Laschenhöhe (H) angeordnet ist, wobei vorzugsweise die wirksame Höhenabmessung (h1) des Haltevorsprungs <40% der Laschenhöhe beträgt,
- insbesondere weiterhin **dadurch gekennzeichnet, dass** beidseitig spiegelsymmetrisch zum Haltevorsprung (121A, 121B) jeweils ein vorsprungfreier Querwandbereich (124) verläuft.

15. Energieführungskette bzw. Kunststofflasche nach einem der vorstehenden Ansprüche, **dadurch gekennzeichnet, dass** jede Lasche (101, 102; 200) einstückig aus einem spritzgussfähigen Kunststoff, insbesondere aus faserverstärktem Thermoplast, hergestellt ist.

## Claims

1. An energy guide chain for guiding lines, such as hoses, cables or the like, between two connection points, using chain links, which in each case comprise two opposing plates, in particular of plastics material, which are connected together by way of at least one crosspiece, the energy guide chain having two strings of plates in each case with an alternating succession of inner plates (101) and outer plates (102), the inner plates having inner overlap regions (103A, 103B) facing the inside of the chain and the outer plates having outer overlap regions (104A, 104B), with which adjacent plates in each case overlap and are connected together articulatedly and swivelably in a plane about a swivel axis (A) and over a swivel angle, the one plate (102) of in each case two adjacent plates in the string of plates engaging for lateral stabilization with a circular arc-shaped guide region (120A, 120B) extending parallel to the swivel plane in a space (123) behind a retaining projection (121A, 121B) on the other plate,
**characterized in that**
the retaining projection (121A, 121B) is spatially limited to a central vertical portion (h1) of the plate height and is of limited dimension in the circumferential direction around the swivel axis (A),
that the guide region (120A, 120B) is arranged such that the guide region (120A, 120B) engages into the space (123) of the retaining projection substantially over the entire swivel angle and
that the retaining projection (121A, 121B) is of limited dimension such that in each swivel position the circular arc-shaped guide region (120A, 120B) is engaged over only over a minor proportion (α) of an arc length or angular width of the guide region (120A, 120B) by the retaining projection (121A, 121B) and that in each swivel position the circular arc-shaped guide region (120A, 120B) is not engaged over (β-α) by the retaining projection (121A, 121B) over a major proportion of the arc length or angular width of the guide region (120A, 120B).

2. A plastics plate, preferably inner plate (101) for an energy guide chain according to Claim 1, comprising two opposing overlap regions (103A; 103B) and a central region (105) located therebetween, each overlap region having either a swivel pin in one piece therewith or a pin receptacle (112) molded therein, in order to connect overlapping plates (101; 102) together swivelably in a plane about a swivel axis (A) and over a swivel angle, and in each case two retaining projections (121A, 121B) being provided in one piece on the central region (105) and each retaining projection projecting over an associated space (123), into which an adjoining outer or inner plate (101; 102) may engage for lateral stabilization with a circular arc-shaped guide region (120A, 120B) extending parallel to the swivel plane, **characterized in that**
each retaining projection (121A, 121B) is of limited dimension (α) in the circumferential direction about the swivel axis (A), such that the circular arc-shaped guide region (120A, 120B) of an engaging plate in each swivel position is engaged over only over a minor proportion (α) of an arc length or angular width of the guide region (120A, 120B) by the retaining projection (121A, 121B), and that the circular arc-shaped guide region (120A, 120B) of an engaging plate in each swivel position is not engaged over (β-α) by the retaining projection (121A, 121B) over a major proportion, wherein the retaining projection (121A, 121B) and the guide region (120A, 120B) are arranged such that the guide region (120A, 120B) engages into the space (123) of the retaining projection (121A, 121B) substantially over the entire swivel angle.

3. A plate pair for an energy guide chain, the plate pair comprising an inner plate (101) according to Claim 2 and an outer plate (102), each plate having two opposing overlap regions (103A, 103B; 104A, 104B) and one central region (105; 106) located therebetween and both plates being embodied for unilateral overlapping with their overlap regions; the outer plate (102) having, in each overlap region (104A, 104B), a swivel pin (110) in one piece therewith and the inner plate (101) having, in each overlap region (103A, 103B), a corresponding pin receptacle (112) molded therein, for connecting the two plates together swivelably in a plane about a swivel axis (A) and over a swivel angle; and
wherein two retaining projections (121A, 121B) being provided for lateral stabilization in one piece on the central region (105) of the inner plate and each retaining projection projecting over an associated space (123);
wherein a circular arc-shaped guide region (120A, 120B) extending parallel to the swivel plane being provided for lateral stabilization at the front end in one piece at each overlap region (104A, 104B) of the outer plate (102) and being able to engage into the space (123) of a retaining projection;
**characterized in that,**
on the central region (105) of the inner plate, each retaining projection (121A, 121B) is of limited dimension (α) in the circumferential direction about the swivel axis (A), such that in each swivel position the circular arc-shaped guide region (120A, 120B) of the engaging outer plate (102) is predominantly not engaged over by the retaining projection (121A, 121B), wherein the retaining projection (121A, 121B) and the guide region (120A, 120B) are arranged such that the guide region (120A, 120B) engages into the space (123) of the retaining projection (121A, 121B) substantially over the entire swivel angle.

4. An energy guide chain or plastics plate according to one of Claims 1 to 3, **characterized in that**
the retaining projection (121A, 121B) is of limited dimension such that in each swivel position the circular arc-shaped guide region (120A, 120B) is engaged over a proportion <40% of the arc length or angular width of the guide region (120A, 120B) by the retaining projection (121A, 121B) and the circular arc-shaped guide region is not engaged over (β-α) by the retaining projection (121A, 121B) over a proportion ≥60% of the arc length or angular width of the guide region (120A, 120B).

5. An energy guide chain or plastics plate according to Claim 4, **characterized in that**
the retaining projection (121A, 121B) is of limited dimension such that in each swivel position the circular arc-shaped guide region (120A, 120B) is engaged over a proportion ≤33% of the arc length or angular width of the guide region (120A, 120B) by the retaining projection 121A, 121B) and the circular arc-shaped guide region is not engaged over (β-α) over a proportion ≥66% of the arc length or angular width of the guide region (120A, 120B) by the retaining projection (121A, 121B)

6. The energy guide chain or plastics plate according to one of Claims 1 to 5, **characterized in that**
each retaining projection (121A, 121B) is arranged within an angular range α < 60°, preferably ≤ 45°, about the adjacent swivel axis (A) and bisected by the longitudinal central plane of the plate; in particular **characterized in that**
the retaining projection (121A, 121B) is delimited in the circumferential direction about the swivel axis such that the circular arc-shaped guide region is covered in each swivel position over a maximum angle (α) about the swivel axis (A) amounting to < 60°, preferably ≤ 45°.

7. The energy guide chain or plastics plate according to one of Claims 1 to 6, **characterized in that**, in order to limit the swivel angle, each overlap region (104A, 104B) has several stop elements, each stop element having stop projections (107; 207) or stop pockets (108; 208), and at least one stop element is arranged wholly or partially in the inner portion of each overlap region, wherein the inner portion is a quadrant around the swivel axis that includes the central region (105, 106; 205) of the plate with the retaining projection (121A, 121B; 221) itself.

8. The energy guide chain or plastics plate according to one of Claims 1 to 6, **characterized in that** the radial engagement depth (r1) of the guide region (120A, 120B) into the space (123) covered by the retaining projection (121A, 121B) is less than 15% and preferably less than or equal to 12.5% of the circular arc radius (r2) of the guide region (120A, 120B).

9. The energy guide chain or plastics plate according to one of Claims 1 to 7, **characterized in that**
- each retaining projection (121A, 121B) at least in part covers a plate opening (126), which extends through a or the central region (105) of the plate to the remote side surface of the plate; and/or **in that**
- each retaining projection (121A, 121B) is connected in one piece to the plate via a material bridge (127) with a greater wall thickness than the retaining projection (121A, 121B);
- in particular further **characterized in that** two retaining projections (121A, 121B) cover a common plate opening (126) through the central region and are preferably molded in one piece with a reinforced material bridge (127) over the plate opening (126).

10. The plastics plate according to Claim 9, **characterized in that** the plate opening (126) has an edge-free, preferably substantially elliptical outline in the main plane of the plate and/or the edge (128), facing the overlap region, of the plate opening (126) is aligned in each case congruently with the protruding edge (131A, 131B) of the retaining projection.

11. The energy guide chain or plastics plate according to one of the preceding claims, **characterized in that**, to limit the swivel angle, one overlap region (104A, 104B) has at least three, preferably four stop projections (107), which in each case form two planar stop surfaces (107A, 107B), preferably perpendicular to the swivel plane, and the overlap region (103A, 103B) complementary thereto has at least three, preferably four corresponding receptacles (108) with in each case two planar counter stop surfaces (108A, 108B) preferably perpendicular thereto.

12. The energy guide chain or plastics plate according to Claim 11, **characterized in that** in each case the overlap region, which engages with its guide region into the space (123) of the retaining projection (121A, 121B), has the stop projections and a one-piece swivel pin (110), wherein the stop projections (107) and the swivel pin protrude laterally staggered relative to the guide region (120A, 120B) and/or from the swivel plane opposite the retaining projection (121A, 121B).

13. The energy guide chain or plastics plate according to one of the preceding Claims 1 to 12, **characterized in that**
- the retaining projection (121A, 121B) does not protrude laterally beyond the outer plate surface and/or terminates flush with the outer plate surface; and/or
- the retaining projection (121A, 121B) forms an inner retaining surface (125) for overlapping the guide region, which is embodied largely parallel to the swivel plane; and/or
- the protruding edge (131A, 131B) of the retaining projection bulges convexly outward towards the swivel axis (A); and/or
- the circular arc-shaped guide region (120A, 120B), for engagement behind the retaining projection (121A, 121), has a circular arc segment protruding at the front end on the overlap region (103A, 103B), which segment has a cross-section which is set back relative to the outer surface of the overlap region (103A, 103B).

14. The energy guide chain or plastics plate according to one of the preceding Claims, **characterized in that**
- each retaining projection (121A, 121B) is arranged mirror-symmetrically to the longitudinal central plane of the plate and/or vertical central plane (M) of the plate and/or is arranged centrally with regard to the plate height (H), wherein the effective height dimension (h1) of the retaining projection preferably amounts to <40% of the plate height,
- in particular further **characterized in that** a projection-less transverse wall region (124) extends on each side, mirror-symmetrically relative to the retaining projection (121A, 121B).

15. The energy guide chain or plastics plate according to one of the preceding Claims, **characterized in that** each plate (101, 102; 200) is made in one piece from an injection-moldable plastics material, in particular of a fiber-reinforced thermoplastic.

## Revendications

1. Chaîne de transport d'énergie pour guider des lignes, telles que des tuyaux, des câbles ou similaires, entre deux points de raccordement au moyen de maillons de chaîne, chacun comprenant deux pattes opposées, en particulier en plastique, qui sont reliées entre elles par au moins une traverse, la chaîne de transport d'énergie comportant deux brins de pattes, chacun avec des pattes intérieures (101) et des pattes extérieures (102) se succédant en alternance, dans laquelle chaîne de transport d'énergie les pattes intérieures présentent des zones de chevauchement intérieures (103A, 103B) tournées vers l'intérieur de la chaîne et les pattes extérieures présentent des zones de chevauchement extérieures (104A, 104B) avec lesquelles les pattes adjacentes se chevauchent et qui sont reliées entre elles de manière articulée dans un plan autour d'un axe de pivotement (A) et peuvent pivoter d'un angle de pivotement, où parmi chaque paire de pattes adjacentes dans le brin de pattes, une patte (102) s'engage, avec une section de guidage en forme d'arc circulaire (120A, 120B) s'étendant parallèlement à l'axe de pivotement, dans un espace libre (123) derrière une saillie de retenue (121A, 121B) pour la stabilisation latérale au niveau de l'autre patte, **caractérisée en ce que** la saillie de retenue (121A, 121B) est limitée dans l'espace à une section centrale en hauteur (h1) de la hauteur de patte et est dimensionnée de manière à être limitée dans la direction circonférentielle autour de l'axe de pivotement (A), **en ce que** la section de guidage (120A, 120B) est agencée de telle sorte que la section de guidage (120A, 120B) s'engage sensiblement sur tout l'angle de pivotement dans l'espace libre (123) de la saillie de retenue, et **en ce que** la saillie de retenue (121A, 121B) est dimensionnée de manière à être limitée de telle sorte que, dans chaque position de pivotement, la section de guidage en forme d'arc circulaire (120A, 120B) n'est chevauchée par la saillie de retenue (121A, 121B) qu'une plus petite partie (α) d'une longueur d'arc ou d'une largeur angulaire de la section de guidage (120A, 120B) et de telle sorte que, dans chaque position de pivotement, la section de guidage en forme d'arc circulaire (120A, 120B) ne soit pas chevauchée (β-α) par la saillie de retenue (121A, 121B) sur une majeure partie de la longueur d'arc ou de la largeur angulaire de la section de guidage (120A, 120B).

2. Patte en plastique, de préférence patte intérieure (101), pour une chaîne de transport d'énergie selon la revendication 1, comprenant deux zones de chevauchement opposées (103A; 103B) et une zone centrale intermédiaire (105), chaque zone de chevauchement comportant soit un axe de pivotement solidaire de celle-ci, soit un logement d'axe (112) formé dans celle-ci pour relier les pattes qui se chevauchent (101; 102) les unes aux autres dans un plan autour d'un axe de pivotement (A) et selon un angle de pivotement, et dans laquelle deux saillies de retenue (121A, 121B) sont prévues d'un seul tenant sur la zone centrale (105) et chaque saillie de retenue fait saillie au-delà d'un espace libre associé (123) dans lequel une patte extérieure ou intérieure adjacente (101; 102) peut s'engager avec une section de guidage en forme d'arc circulaire (120A, 120B) s'étendant parallèlement au plan de pivotement, pour la stabilisation latérale, **caractérisée en ce que**
chaque saillie de retenue (121A, 121B) est dimensionnée de manière à être limitée (α) dans la direction circonférentielle autour de l'axe de pivotement (A) de telle sorte que la section de guidage en forme d'arc circulaire (120A, 120B) d'une patte d'engagement dans chaque position de pivotement n'est chevauchée par la saillie de retenue (121A, 121B) qu'une plus petite partie (α) d'une longueur d'arc ou d'une largeur angulaire de la section de guidage (120A, 120B) et de telle sorte que, dans chaque position de pivotement, la section de guidage en forme d'arc circulaire (120A, 120B) d'une patte d'engagement ne soit pas chevauchée (β-α) par la saillie de retenue (121A, 121B) sur une majeure partie de la longueur d'arc ou de la largeur angulaire de la section de guidage (120A, 120B), dans laquelle la saillie de retenue (121A, 121B) et la section de guidage (120A, 120B) sont disposées de telle manière que la section de guidage (120A, 120B) s'engage dans l'espace libre (123) de la saillie de retenue (121A, 121B) sensiblement sur tout l'angle de pivotement.

3. Paire de pattes pour une chaîne de transport d'énergie, la paire de pattes comprenant une patte intérieure (101) selon la revendication 2 et une patte extérieure (102), chaque patte ayant deux zones de chevauchement opposées (103A, 103B; 104A, 104B) et une zone centrale intermédiaire (105; 106), et les deux pattes étant conçues pour se chevaucher unilatéralement avec leurs régions de chevauchement; la patte extérieure (102) comporte un axe de pivotement (110) solidaire de celle-ci dans chaque zone de chevauchement (104A, 104B) et la patte intérieure (101) comporte un logement d'axe de pivotement correspondant (112) formé dans celle-ci dans chaque zone de chevauchement (103A, 103B) afin de relier les deux pattes l'une à l'autre dans un plan autour d'un axe de pivotement (A) et selon un angle de pivotement; et dans laquelle deux saillies de retenue (121A, 121B) sont prévues d'un seul tenant sur la zone centrale (105) de la patte intérieure pour la stabilisation latérale, et chaque saillie de retenue fait saillie au-delà d'un espace libre correspondant (123);
dans laquelle une section de guidage en forme d'arc circulaire (120A, 120B) s'étendant parallèlement au plan de pivotement est prévue d'un seul tenant sur la face d'extrémité de chaque zone de chevauchement (104A, 104B) de la patte extérieure (102) pour la stabilisation latérale et peut s'engager dans l'espace libre (123) d'une saillie de retenue;
**caractérisée en ce que**
chaque saillie de retenue (121A, 121B) sur la zone centrale (105) de la patte intérieure est dimensionnée de manière à être limitée (α) dans la direction circonférentielle autour de l'axe de pivotement (A) de telle sorte que la section de guidage en forme d'arc circulaire (120A, 120B) de la patte extérieure d'engagement (102) ne soit pas principalement chevauchée par la saillie de retenue (121A, 121B) dans chaque position de pivotement, dans laquelle la saillie de retenue (121A, 121B) et la section de guidage (120A, 120B) sont agencées de telle manière que la section de guidage (120A, 120B) s'engage dans l'espace libre (123) de la saillie de retenue (121A, 121B) sensiblement sur tout l'angle de pivotement.

4. Chaîne de transport d'énergie ou patte en plastique selon l'une quelconque des revendications 1 à 3, **caractérisée en ce que**
la saillie de retenue (121A, 121B) est dimensionnée de manière à être limitée de telle sorte que, dans chaque position de pivotement, la section de guidage en forme d'arc circulaire (120A, 120B) soit chevauchée par la saillie de retenue (121A, 121B) d'une partie inférieure à 40 % de la longueur de l'arc ou de la largeur angulaire de la section de guidage (120A, 120B) et la section de guidage en forme d'arc circulaire (120A, 120B) n'est pas chevauchée (β-α) par la saillie de retenue (121A, 121B) sur une partie ≥ 60 % de la longueur de l'arc ou de la largeur angulaire de la section de guidage (120A, 120B).

5. Chaîne de transport d'énergie ou patte en plastique selon la revendication 4, **caractérisée en ce que** la saillie de retenue (121A, 121B) est dimensionnée de manière à être limitée de telle sorte que, dans chaque position de pivotement, la section de guidage en forme d'arc circulaire (120fA, 120B) soit chevauchée par la saillie de retenue (121A, 121B) d'une partie ≤ 33 % de la longueur de l'arc ou de la largeur angulaire de la section de guidage (120A, 120B) et la section de guidage en forme d'arc circulaire (120A, 120B) n'est pas recouverte (β-α) par la saillie de retenue (121A, 121B) d'une partie ≥ 66 % de la longueur de l'arc ou de la largeur angulaire de la section de guidage (120A, 120B).

6. Chaîne de transport d'énergie ou patte en plastique selon l'une quelconque des revendications 1 à 5, **caractérisée en ce que**
chaque saillie de retenue (121A, 121B) est disposée autour de l'axe de pivotement adjacent (A) dans une plage angulaire α < 60°, de préférence α < 45°, qui est divisée en deux par le plan central longitudinal de la patte;
caractérisée en particulier **en ce que**
la saillie de retenue (121A, 121B) est limitée dans la direction circonférentielle autour de l'axe de pivotement de telle sorte que la section de guidage en forme d'arc circulaire est recouverte dans chaque position de pivotement sur un angle maximal (α) autour de l'axe de pivotement (A) qui est < 60°, de préférence ≤ 45°.

7. Chaîne de transport d'énergie ou patte en plastique selon l'une quelconque des revendications 1 à 6, **caractérisée en ce que**, pour limiter l'angle de pivotement, chaque zone de chevauchement (104A, 104B) comporte plusieurs éléments d'arrêt comprenant des saillies d'arrêt (107; 207) ou des poches d'arrêt (108; 208), et au moins un élément d'arrêt est disposé complètement ou partiellement dans la région partielle intérieure de chaque zone de chevauchement, la région partielle intérieure étant un quadrant autour de l'axe de pivotement qui comprend la zone centrale (105, 106; 205) de la patte avec la saillie de retenue (121A, 121B; 221) elle-même.

8. Chaîne de transport d'énergie ou patte en plastique selon l'une quelconque des revendications 1 à 6, **caractérisée en ce que** la profondeur d'engagement radial (r1) de la section de guidage (120A, 120B) dans l'espace libre (123) recouvert par la saillie de retenue (121A, 121B) est inférieure à 15 %, de préférence inférieure ou égale à 12,5 % du rayon de l'arc (r2) de la section de guidage (120A, 120B)

9. Chaîne de transport d'énergie ou patte en plastique selon l'une quelconque des revendications 1 à 7, **caractérisée en ce que**
- chaque saillie de retenue (121A, 121B) recouvre au moins partiellement une ouverture de patte (126) qui s'étend à travers une ou la zone centrale (105) de la patte jusqu'à la surface latérale de la patte opposée à celle-ci; et/ou **en ce que**
- chaque saillie de retenue (121A, 121B) est reliée d'un seul tenant à la patte par un pont de matière (127) dont l'épaisseur de paroi est supérieure à celle de la saillie de retenue (121A, 121B);
- en particulier **caractérisée en outre en ce que** deux saillies de retenue (121A, 121B) recouvrent une ouverture commune (126) de la patte à travers la zone centrale et sont de préférence formées d'un seul tenant avec un pont en matériau renforcé (127) au-dessus de l'ouverture (126) de la patte.

10. Patte en plastique selon la revendication 9, **caractérisée en ce que** l'ouverture de patte (126) présente un contour sans bord, de préférence sensiblement elliptique dans le plan principal de la patte, et/ou le bord (128) de l'ouverture de patte (126) tourné vers la zone de chevauchement est dans chaque cas congruent avec le bord en saillie (131A, 131B) de la saillie de retenue.

11. Chaîne de transport d'énergie ou patte en plastique selon l'une quelconque des revendications précédentes, **caractérisée en ce que**, pour limiter l'angle de pivotement, une zone de chevauchement (104A, 104B) comporte au moins trois, de préférence quatre saillies d'arrêt (107) qui forment chacune deux surfaces d'arrêt plates (107A, 107B) de préférence perpendiculaires au plan de pivotement, et la zone de chevauchement complémentaire (103A, 103B) comporte au moins trois, de préférence quatre logements correspondants (108), chacun avec deux surfaces de contre-butée plates (108A, 108B) qui sont de préférence perpendiculaires au plan de pivotement.

12. Chaîne de transport d'énergie ou patte en plastique selon la revendication 11, **caractérisée en ce que** la zone de chevauchement, qui s'engage avec sa section de guidage dans l'espace libre (123) de la saillie de retenue (121A, 121B), comprend les saillies d'arrêt et un axe de pivotement intégré (110), les saillies d'arrêt (107) et l'axe de pivotement faisant saillie du plan de pivotement de manière décalée latéralement par rapport à la partie de guidage (120A, 120B) et/ou à l'opposé de la saillie de retenue (121A, 121B).

13. Chaîne de transport d'énergie ou patte en plastique selon l'une quelconque des revendications précédentes 1 à 12, **caractérisée en ce que**
- la saillie de retenue (121A, 121B) ne dépasse pas latéralement de la surface extérieure de la patte et/ou affleure la surface extérieure de la patte; et/ou
- la saillie de retenue (121A, 121B) forme une surface de retenue intérieure (125) destinée à chevaucher la section de guidage, la surface de retenue étant conçue pour être largement parallèle au plan de pivotement; et/ou
- le bord saillant (131A, 131B) de la saillie de retenue est bombé de manière convexe vers l'axe de pivotement (A); et/ou
- la section de guidage en forme d'arc circulaire (120A, 120B), destinée à s'engager derrière la saillie de retenue (121A, 121B), comporte un segment d'arc circulaire faisant saillie à la face d'extrémité de la région de chevauchement (103A, 103B) dont la section transversale est en retrait par rapport à la surface extérieure de la région de chevauchement (103A, 103B).

14. Chaîne de transport d'énergie ou patte en plastique selon l'une quelconque des revendications précédentes, **caractérisée en ce que**
- chaque saillie de retenue (121A, 121B) est symétrique par rapport au plan longitudinal central de la patte et/ou au plan central de hauteur (M) de patte et/ou est disposée de manière centrale par rapport à la hauteur (H) de patte, la dimension effective en hauteur (h1) de la saillie de retenue étant de préférence inférieure à 40 % de la hauteur de patte,
- caractérisé en particulier **en ce qu'**une zone de paroi transversale (124) exempte de saillies s'étend des deux côtés de manière symétrique par rapport à la saillie de retenue (121A, 121B).

15. Chaîne de transport d'énergie ou patte en plastique selon l'une quelconque des revendications précédentes, **caractérisée en ce que** chaque patte (101, 102; 200) est réalisée d'une seule pièce en une matière plastique moulable par injection, en particulier en thermoplastique renforcé de fibres.
